(19) Europäisches Patentamt
European Patent Office
Office européen des brevets

(11) **EP 3 430 101 B1**

(12) **EUROPÄISCHE PATENTSCHRIFT**

(45) Veröffentlichungstag und Bekanntmachung des Hinweises auf die Patenterteilung:
**05.11.2025 Patentblatt 2025/45**

(21) Anmeldenummer: **17707259.2**

(22) Anmeldetag: **23.02.2017**

(51) Internationale Patentklassifikation (IPC):
**C08L 83/06** *(2006.01)*   **C09J 133/04** *(2006.01)*
**C09J 7/38** *(2018.01)*   **C09J 133/08** *(2006.01)*
**C09J 155/00** *(2006.01)*   **C09J 183/04** *(2006.01)*

(52) Gemeinsame Patentklassifikation (CPC):
(C-Sets verfügbar)
**C09J 133/08; C08L 83/06; C09J 7/38;**
**C09J 133/04; C09J 155/005; C09J 183/04;**
C09J 2203/334; C09J 2301/408; C09J 2421/00;
C09J 2433/00; C09J 2483/00   (Forts.)

(86) Internationale Anmeldenummer:
**PCT/EP2017/054237**

(87) Internationale Veröffentlichungsnummer:
**WO 2017/157639 (21.09.2017 Gazette 2017/38)**

(54) **SILIKONHALTIGER HAFTKLEBSTOFF SOWIE HAFTKLEBEARTIKEL, WIE EIN KLEBEBAND ODER EIN ETIKETT, UND VERFAHREN ZU DESSEN HERSTELLUNG**

PRESSURE-SENSITIVE ADHESIVE CONTAINING SILICONE AND PRESSURE-SENSITIVE ADHESIVE ARTICLE, SUCH AS AN ADHESIVE TAPE OR A LABEL, AND METHOD FOR ITS MANUFACTURE

ADHESIF SENSIBLE À LA PRESSION CONTENANT DE LA SILICONE ET ARTICLE ADHÉSIF SENSIBLE À LA PRESSION, COMME UNE BANDE ADHESIVE OU UNE ETIQUETTE, ET SON PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.03.2016 EP 16160948**

(43) Veröffentlichungstag der Anmeldung:
**23.01.2019 Patentblatt 2019/04**

(73) Patentinhaber: **Coroplast Fritz Müller GmbH & Co. KG**
**42279 Wuppertal (DE)**

(72) Erfinder: **FRIGGE, Christoph**
**45549 Sprockhövel (DE)**

(74) Vertreter: **Dr. Solf & Zapf**
**Patent- und Rechtsanwalts PartG mbB**
**Schlossbleiche 20**
**42103 Wuppertal (DE)**

(56) Entgegenhaltungen:
EP-A1- 2 692 811   WO-A1-99/26572
DE-A1- 10 156 672

- **"DIN 53019-1:2008-09 Viskosimetrie - Messung von Viskositaeten und Flie�kurven mit Rotationsviskosimetern - Teil 1: Grundlagen und Messgeometrie", DIN 53019-1:2008-09,, vol. DIN 53019-1, 1 January 2008 (2008-01-01), pages 22pp, XP009195180**
- **ANONYMOUS WACKER-CHEMIE: "Wacker Silicon�le AK", 1 January 2001 (2001-01-01), pages 1 - 12, XP093108644, Retrieved from the Internet <URL:https://www.hellermanntyton.at/binaries/content/assets/downloads/at/datenblatter/01-wacker-silikone/siliconefluidsakde.pdf> [retrieved on 20231204]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- **SIEGHARD MILLOW: "kinematische Viskosität -", RÖMPP ONLINE VERSION 4.0, 1 November 2005 (2005-11-01), pages 1 - 1, XP055296855, Retrieved from the Internet <URL:https://roempp.thieme.de/roempp4.0/do/data/RD-11-01081> [retrieved on 20160822]**

(52) Gemeinsame Patentklassifikation (CPC): (Forts.)

C-Sets
**C09J 133/08, C08L 83/06;**
C09J 2421/00, C09J 2483/00;
C09J 2433/00, C09J 2483/00

**Beschreibung**

Die vorliegende Erfindung betrifft einen silikonhaltigen Haftklebstoff, in Form einer Klebstoffmasse, die mindestens eine erste Klebstoffkomponente und eine zweite, silikonhaltige Klebstoffkomponente enthält, wobei die zweite, silikonhaltige Klebstoffkomponente aus einem unvernetzten Polysiloxan besteht.

Des Weiteren betrifft die Erfindung einen Haftklebeartikel, wie ein Klebeband, umfassend einen bandförmigen Träger, auf den zumindest einseitig ein Haftklebstoff in Form einer Klebstoffmasse aufgetragen ist, oder ein Etikett, umfassend ein insbesondere aus Papier bestehendes Trägermaterial, auf das zumindest einseitig ein Haftklebstoff in Form einer Klebstoffmasse aufgetragen ist.

Schließlich betrifft die Erfindung ein Verfahren zur Herstellung eines derartigen Haftklebeartikels.

Im Rahmen der Anmeldung schließt der allgemeinere Begriff des Haftklebeartikels neben Klebebändern, die der Länge nach bandförmig geschnitten werden, also bei denen die Länge ein Vielfaches der Breite ist, auch entsprechende Stanzteile und insbesondere Etiketten mit ein, bei denen Länge und Breite etwa in der gleichen Größenordnung liegen.

Heute gebräuchliche Haftklebstoffe werden überwiegend aus Natur- oder Synthesekautschuk oder aus Polyacrylaten hergestellt. Kautschukklebstoffe bestehen aus Polyisopren bzw. Block-Kopolymeren aus Styrol und Isopren bzw. Butadien und benötigen zur Erlangung haftkklebriger Eigenschaften die Abmischung mit Harzen. Zumeist werden noch zusätzlich Mineralöl als Weichmacher und/oder anorganische Füllstoffe oder Pigmente wie Kreide, Zinkoxid oder Titandioxid zugegeben. Acrylathaftklebstoffe bestehen in der Regel aus einem Kopolymerisat verschiedener Ester der Acrylsäure. Üblich sind insbesondere 2-Ethylhexylacrylat und n-Butylacrylat.

Daneben gibt es noch lösemittelhaltige Spezialhaftklebstoffe auf der Basis von vernetzten Polydimethylsiloxanen, sogenannte Silikonhaftklebstoffe. Diese bestehen aus linearem Polydimethylsiloxan und/oder Polydimethyldiphenylsiloxan mit endständigen Silanol-Gruppen als Basispolymer und aus einem klebrigmachenden Harz, welches wiederum aus einem quaternären Silikatkern mit ihn umgebenden Trimethylsiloxan-Gruppen und Dimethylsilanol-Gruppen besteht. Beim Entfernen des Lösemittels und Erhitzen kommt es zu einer Kondensationsreaktion zwischen dem Harz und dem Basispolymer, als deren Produkt eine haftkklebrige Masse entsteht. Zur Verbesserung der Eigenschaften, insbesondere der Kohäsion, wird das Kondensat noch zusätzlich vernetzt, wobei dies entweder über einen Peroxidkatalysierten Radikalmechanismus oder über einen Platin-katalysierten Additionsmechanismus geschieht. Die Eigenschaften des Klebstoffes hängen dabei von der Kettenlänge der Reaktanden, ihrem Mischungsverhältnis und dem Grad der Vernetzung ab.

Ein ähnlicher Haftklebstoff, wie der der eingangs genannten Art ist aus der JPS 62-295982 A bekannt. Dieses Dokument beschreibt die Kombination eines Acrylathaftklebstoffes mit einem Silikonhaftklebstoff zur Erzielung spezieller Klebeeigenschaften. Der Klebstoff findet in einem Befestigungssystem für die Automobilindustrie Anwendung und ist ein Hybridklebstoff, in dem die erste Klebstoffkomponente und die zweite, silikonhaltige Klebstoffkomponente über ein Polyurethan oder ein Polyisocyanat miteinander vernetzt sind.

Aus der EP 2 692 811 A1 ist eine Klebstoff-Zusammensetzung und ein Film für ein optisches Bauteil bekannt. Diese Zusammensetzung enthält eine acrylat- und alkylhaltige Kopolymere Komponente (A), eine Kopolymere Komponente (B), welche zu mindestens 60 Masseprozent aus einem monomeren Konstituenten gebildet ist, welcher Polyoxyalkylengruppen enthält, des Weiteren enthält sie ein Alkalimetellsalz als dritte Komponente (C) und schließlich als vierte Komponente (D) eine Dimethylpolysiloxan-Verbindung, bei der es sich ebenfalls um ein Kopolymer handelt, insofern diese Verbindung an einer Dimethylpolysiloxan-Grundkette endständig - oder bevorzugt als Propf-Kopolymer seitenständig - als weitere polymere Konstituenten Polyoxyalkylen-Gruppen enthält. Durch diese vierte Komponente (D) sollen die antistatischen Eigenschaften verbessert werden. Auch wird detailliert ausgeführt, dass durch das Verhältnis der beiden Kopolymer-Konstituenten ein bestimmtes Verhältnis von lipophil und hydrophil wirkenden Anteilen im Makromolekül eingestellt werden kann, welches sich im sogenannten HLB-Wert (Hydrophilic-Lipophilic Balance) ausdrückt. Dieser Wert soll nicht größer sein als 9.

Des Weiteren sind aus der US 5 308 887, der US 5 464 659, der US 5 624 763 und der US 8 614 278 ebenfalls Haftklebstoffe bekannt, die der eingangs genannten Art ähnlich sind.

Die ersten drei Dokumente beschreiben dabei weitgehend lösungsmittelfreie Kombinationen aus Acrylat- und Silikon-Haftklebstoffen. Diese Haftklebstoffe zeigen eine vorteilhaft gute Haftung auf insbesondere unpolaren Oberflächen. Zu ihrer Herstellung wird der lösungsmittelbasierte Silikonhaftklebstoff zunächst getrocknet und dann in den Acrylatmonomeren gelöst. Nach Zugabe eines Vernetzers und eines Fotoinitiators erfolgt unter der Wirkung von UV-Strahlung eine Polymerisation und Vernetzung, wobei insbesondere im Endprodukt im Wesentlichen zwei getrennte, sich gegenseitig durchdringende Polymernetzwerke eines Polysiloxans und eines Polyacrylats entstehen. Gemäß dem letztgenannten Dokument werden dagegen Siloxan und Acrylat gezielt chemisch zu einem Kopolymer-Netzwerk miteinander vernetzt.

Die WO 99/26572 A1 beschreibt eine vitaminhaltige Antifalten-Zusammensetzung, die mittels eines selbstklebenden Streifens mit der menschlichen Haut in Kontakt gebracht werden kann. Auch wenn der Anwendungsbereich weit entfernt ist von der mit der vorliegenden Erfindung zu erzielenden, nachstehend im Detail beschriebenen, schneidverbessernden Wirkung, so erwähnt das Dokument doch einen gattungsgemäßen Haftklebstoff mit Zusätzen verschiedenartiger Polysiloxan-Zusammensetzungen, u. a. mit unvernetztem Polydimethylsiloxan, bzw. auch einen Klebeartikel der gattungsgemäßen Art, insofern sich die klebstoffhaltige Antifalten-Zusammensetzung auf einem Träger befindet, der durchgängig ganz allgemein als "impermeable film backing" bezeichnet wird. In dem bekannten Antifaltenmittel dient das Silikon zur Einstellung einer verminderten Klebkraft auf der Haut, wobei etwa acht Stunden - also eine Über-Nacht-Applikation - als Obergrenze der Klebezeit angesehen werden. Es ist daher eine Migration des Polysiloxans an die klebeaktive Oberfläche erwünscht, welche nur mit niedermolekularen Silikonölen zu erreichen ist. Es wird dementsprechend ausgeführt, dass in der vitaminhaltige Antifalten-Zusammensetzung Silikone mit Viskositäten von 20 - 25000 cStokes (= $mm^2$/s) zum Einsatz kommen. Bevorzugt, und so auch in den Beispielen belegt, sind insbesondere Silikone mit Viskositäten von 20 - 12500 cStokes (= $mm^2$/s).

In der Klebeband- oder Etikettenindustrie werden Haftklebstoffe in dünnen Schichten, d. h. mit einer spezifischen Masse im Bereich von 15 $g/m^2$ bis 3000 $g/m^2$, auf Träger aufgetragen, um daraus entsprechende Klebebänder oder Etiketten zu fertigen. Im fertigen Produkt, aber auch bereits unmittelbar nach der Beschichtung und bei der Verarbeitung, sind dabei insbesondere aggressiv klebende Klebstoffschichten in der Regel mit einem Trennpapier oder einer Trennfolie abgedeckt. Diese bestehen aus einem Papier oder einer Kunststofffolie, welche wiederum häufig ein- oder beidseitig mit einer dünnen Schicht eines vernetzten Polydimethylsiloxans beschichtet sind. Die Grammatur einer solchen Schicht kann insbesondere im Bereich von 0,5 $g/m^2$ bis 1,5 $g/m^2$ liegen.

Bei der Verarbeitung von Klebebändern oder Etikettenmaterial kommen in der Regel verschiedene Schneid- und Stanztechniken zur Anwendung, mittels derer ein in großer Breite, insbesondere in einer Breite im Bereich von 100 mm bis 2500 mm, hergestelltes Basisprodukt für die Weiterverarbeitung oder die Endanwendung die passenden Abmessungen erhält. Zwangsläufig geraten die dabei verwendeten Schneidwerkzeuge dabei an den Schnittkanten in direkten Kontakt mit dem Haftklebstoff. Je nach den Eigenschaften des zu schneidenden Materials, wie der Klebstoffdicke, des Verhältnisses der Klebstoffdicke zur Trägerdicke, der Klebrigkeit und den viskoelastischen Eigenschaften des Klebstoffs, die einen sogenannten kalten Fluss verursachen können, aber auch je nach den Umgebungsbedingungen, wie Temperatur und Feuchte, kommt es nach einer mehr oder weniger großen Zahl von Schneidvorgängen zu einem Verschmutzen der Schneidwerkzeuge. Dies ist insbesondere dann der Fall, wenn nicht nur eine, sondern mehrere Lagen in einem Schneidvorgang geschnitten werden oder wenn eine sehr hohe Anzahl von Schneidvorgängen ohne zwischenzeitliche Reinigung durchgeführt wird. Bei Klebebändern werden beispielsweise Rollen durch Kreismesser oder Stichel aus typischen Breitrollen mit bis zu mehreren hundert Lagen abgestochen. In der Etikettenindustrie ist es üblich, selbstklebende Bogenware in Riesen mit mehreren hundert Bögen über einen Planschneider zu schneiden. Als obere Grenze sind insbesondere tausend Lagen anzusehen.

Um der Verschmutzung entgegenzuwirken, ist es bekannt, besondere Messergeometrien mit hinterschliffener Schneide sowie auch antihaftbeschichtete Messer einzusetzen oder aber Schneidhilfsstoffe in Form von Talkum oder Schneidöl auf die Schneidwerkzeuge aufzubringen.

Alle diese Maßnahmen sind aber auch immer mit Nachteilen verbunden. So sind flüssige Schneidhilfsstoffe bei der Verarbeitung selbstklebender Papiere kaum einsetzbar, da sie in das Papier eindringen können und es so verschmutzen und schwächen. Auch bei anderen zu schneidenden Materialien sind solche Hilfsstoffe nicht gern gesehen, da sie nicht nur die Trägermaterialien verschmutzen, sondern bei einer Überdosierung, z. B. bei Beginn des Schneidvorganges, gegebenenfalls auch die Klebrigkeit des Haftklebstoffes unkontrolliert reduzieren können. Einmalig aufgebrachte Schneidhilfsstoffe oder auch klebstoffabweisende Beschichtungen der Schneidwerkzeuge, z. B. aus Keramik oder Teflon, nutzen sich zudem oft schnell ab, so dass die Wirkung unerwünscht rasch nachlässt.

Durch die Verschmutzung der Schneidwerkzeuge kann es beispielsweise beim Bogenschneiden oder auch bei der Hochgeschwindigkeitsverarbeitung dazu kommen, dass geschnittene Teile mit ihrer nach dem Schneiden leicht klebrigen Schnittkante an den Schneidwerkzeugen hängen bleiben und dadurch der gesamte Prozess gestört wird.

Der Erfindung liegt das Problem zugrunde, einen silikonhaltigen Haftklebstoff der eingangs genannten Art zu schaffen, der, wenn er ein- oder doppelseitig auf ein Trägermaterial, ein Trennpapier oder eine Trennfolie aufgebracht wird, ein im Vergleich mit herkömmlichen Haftklebstoffen verbessertes Schneidverhalten aufweist, ohne dass dabei ein signifikanter Verlust der Klebkraft und/oder der Scherfestigkeit auftritt.

Des Weiteren liegt der Erfindung das Problem zugrunde, einen Haftklebeartikel, wie ein Klebeband oder wie ein Etikett der eingangs genannten Art, mit einem Haftklebstoff auszustatten, der bei der Herstellung der Klebebänder und/oder Etiketten, insbesondere bei während der Herstellung auftretenden Schneidprozessen, unter Ausschluss einer negativen Qualitätsbeeinflussung auf die hergestellten Produkte eine verbesserte Verarbeitbarkeit gewährleistet, wobei die vorstehend beschriebenen Nachteile vermieden werden sollen.

Das der Erfindung zugrunde liegende Problem wird für den Haftklebstoff in Form einer Klebstoffmasse, die mindestens eine erste Klebstoffkomponente und eine zweite, silikonhaltige Klebstoffkomponente enthält, wobei die zweite, silikonhaltige Klebstoffkomponente aus einem unvernetzten Polysiloxan besteht und in einem Anteil im Bereich von 1,0 bis 10,0 Masseprozent in der Klebstoffmasse enthalten ist, und die erste Klebstoffkomponente ein Haftklebstoff

- auf Basis eines Synthese- oder Naturkautschuks,
- ein Dispersionsklebstoff auf der Basis eines Polyacrylsäureesters,
- ein Schmelzklebstoff auf Basis eines UV-vernetzten Polyacrylsäureesters
- oder ein UV-polymerisierter Polyacrylsäureester ist, dadurch gelöst,

- dass die kinematische Viskosität - bestimmt nach DIN 53019-1:2008-09 bei 25 °C - des unvernetzten Polysiloxans mindestens 100000 mm$^2$/s und höchstens 10000000 mm$^2$/s beträgt
oder

- dass das Zahlenmittel $M_n$ der molaren Masse des unvernetzten Polysiloxans - bestimmt nach der - ab einer molaren Masse von 2500 g/mol geltenden - Formel $M_n = [$ (log v -1) / 0,0123 $]^2$, wobei v der Zahlenwert der kinematischen Viskosität bei 25 °C ist, bestimmt nach DIN 53019-1:2008-09 und angegeben in mm$^2$/s, und $M_n$ das Zahlenmittel der molare Masse ist - kleiner ist als 10000 g/mol, wobei die zweite, silikonhaltige Klebstoffkomponente mikroverkapselt ist.

Alternativ kann erfindungsgemäß vorgesehen sein,

- dass das Zahlenmittel $M_n$ der molaren Masse des unvernetzten Polysiloxans - bestimmt nach der Formel $M_n = [$ (log v -1) / 0,0123 $]^2$, wobei v der Zahlenwert der kinematischen Viskosität bei 25 °C ist, bestimmt nach DIN 53019-1:2008-09 und angegeben in mm$^2$/s, und $M_n$ das Zahlenmittel der molaren Masse ist - mindestens 80000 g/mol, vorzugsweise mindestens 100000 g/mol, und höchstens 500000 g/mol beträgt
oder

- dass die kinematische Viskosität Viskosität - bestimmt nach DIN 53019-1:2008-09 bei 25 °C - des unvernetzten Polysiloxans kleiner ist 100000 mm$^2$/s, wobei die zweite, silikonhaltige Klebstoffkomponente mikroverkapselt ist.

Mit Vorteil kann es sich dabei insbesondere um ein unvernetztes Polydimethylsiloxan mit der chemischen Formel $(CH_3)_3Si\text{-}[O\text{-}Si(CH_3)_2]_m\text{-}O\text{-}Si(CH_3)_3$ handeln, wobei sich der Polymerisationsgrad zu n = m + 2 ergibt und für den Index m ≥ 0 gilt und wobei die molare Masse der Wiederholeinheit $\text{-}[O\text{-}Si(CH_3)_2]\text{-}$ 74,15 g/mol beträgt , wobei das unvernetzte Polydimethylsiloxan vorzugsweise in einem Anteil im Bereich von 1,0 bis 10,0 Masseprozent in der Klebstoffmasse enthalten ist.

Für den Haftklebeartikel, insbesondere also das Klebeband und das Etikett der eingangs genannten Art, wird das der Erfindung zugrunde liegende Problem dadurch gelöst, dass die Klebstoffmasse mindestens eine erste Klebstoffkomponente und eine zweite, silikonhaltige Klebstoffkomponente enthält, wobei die zweite, silikonhaltige Klebstoffkomponente wie vorstehend beschrieben geartet bzw. anteilig in der Klebstoffmasse enthalten ist.

Der Träger oder das Trägermaterial kann aus einem Papier, einer Folie oder einem textilen Stoff, wie einem Gewebe und/oder einem Vlies, bestehen und vorzugsweise eine Dicke im Bereich von 10 μm bis 500 μm, insbesondere im Bereich von 20 μm bis 200 μm, aufweisen.

Gemäß dem erfindungsgemäßen Verfahren kann der erfindungsgemäße Haftklebeartikel - ausgehend von einem Basisprodukt in einer Breite im Bereich von 100 mm bis 2500 mm - durch Schneiden oder Stanzen seine Endabmessung erhalten, wobei die dabei verwendeten Schneidwerkzeuge an den Schnittkanten in direkten Kontakt mit dem erfindungsgemäßen Haftklebstoff gelangen. Hierbei ist es vorteilhafterweise nicht nötig, besondere Messergeometrien, wie mit hinterschliffener Schneide, oder Messer mit Antihaftbeschichtung einzusetzen und/oder Schneidhilfsstoffe auf die Schneidwerkzeuge aufzubringen.

Polysiloxane bestehen aus einer Kette, die abwechselnd Silizium- und Sauerstoffatome enthält. Dabei sättigen organische Reste die freien Valenzen des Siliziums ab. Das Polysiloxan mit dem einfachsten Aufbau und gleichzeitig mit der mit Abstand größten - jedoch nicht erfindungsgemäßen - Verbreitung ist das Polydimethylsiloxan, bei dem diese organischen Reste Methylgruppen sind. Polydimethylsiloxane finden in Form von Silikonölen weite Verbreitung. Im Gegensatz zu Mineralölen oder Pflanzenölen haben sie keine organischen, also kohlenstoffbasierten, Kettenanteile. Kopolymere, insbesondere, wie sie in der aus der EP 2 692 811 A1 bekannten Klebstoff-Zusammensetzung enthalten sind, also beispielsweise Dimethylpolysiloxan-Grundketten, die mit weiteren polymeren Konstituenten, wie z. B. Polyoxyalkylen-Gruppen, verbunden sind, werden im Rahmen der vorliegenden Anmeldung nicht unter dem Begriff "unvernetztes Polysiloxan" subsumiert.

Die chemische Formel des Polydimethylsiloxans lautet $(CH_3)_3Si\text{-}[O\text{-}Si(CH_3)_2]_m\text{-}O\text{-}Si(CH_3)_3$, wobei sich der Polymerisationsgrad zu n = m + 2 ergibt und für den Index m gilt: m ≥ 0. Die molare Masse der Wiederholeinheit beträgt 74,15 g/mol. Polydimethylsiloxan ist farblos, durchsichtig und gilt als ungiftig und chemisch inert. Unter "inert" wird dabei auch subsumiert, dass das Polydimethylsiloxan unter UV-Bestrahlung passiv bleibt und insbesondere nicht mit der ersten Klebstoffkomponente chemisch interagiert. Es kann daher in einer Klebstoffmasse leicht als Bestandteil nachgewiesen werden.

Das einfachste Silikonöl, welches kommerziell von der Wacker AG als "AK 0,65" vertrieben wird, besteht aus einer Si-O-Si-Einheit, bei der die freien Valenzen mit Methylgruppen abgedeckt sind. Der Polymerisationsgrad n ist also gleich 2. Diese niedermolekulare Verbindung, ein Dimer, deren Molmasse 162 g/mol beträgt, wird im Rahmen der Anmeldung zwar als erfindungsgemäß einsetzbares "Polydimethylsiloxan" betrachtet, aber nur bei einer Mikroverkapselung. Die kinematische Viskosität liegt bei nur 0,65 mm$^2$/s. Stattdessen kann jedoch von der Wacker AG unter dem Namen "AK 30000" angebotenes Silikonöl, welches eine kinematische Viskosität von 30000 mm$^2$/s und eine molare Masse von 80000 g/mol aufweist, erfindungsgemäß ohne Mikroverkapselung zum Einsatz kommen.

Die Angaben zur kinematischen Viskosität v (griechischer Buchstabe "ny") in Hersteller-Datenblättern, wie beispielsweise insbesondere für das "AK 500000" der Wacker AG, beruhen hinsichtlich der Messmethode für die Viskositätsmessung oft auf einer Bestimmung nach der Norm DIN 53019-1:2008-09 "Viskosimetrie - Messung von Viskositäten und Fließkurven mit Rotationsviskosimetern - Teil 1: Grundlagen und Messgeometrie". Diese Norm wird auch für die vorliegende Anmeldung als maßgebliche Bestimmungsmethode zugrunde gelegt.

Die Messung erfolgt demgemäß mit einem Rotationsviskosimeter unter Bestimmung der Rotationsgeschwindigkeit und des Drehmoments bei 25 °C. Zur Messung der Viskosität wird ein Messkörper in die zu vermessende Substanz eingetaucht und rotiert mit einer vorgegebenen Drehzahl n in einem zylindrischen Behälter. Die im Drehmoment wirkende Kraft, welche benötigt wird, um diese Drehzahl n konstant zu halten, ist ein Maß für die dynamische Viskosität $\eta$.

Bekanntermaßen erhält man dann die kinematische Viskosität v mittels einer Division der dynamischen Viskosität $\eta$ durch die Dichte $\rho$ (vgl. auch Sieghard Millow: "kinematische Viskosität", Römpp online Version 4.0, 1. November 2005, Seiten 1-1, [gefunden im Internet: 2016-08-22], URL: https://roempp.thieme.de/roempp4.0/ do/data/RD-11-01081). Die Dichte $\rho$ liegt bei den erfindungsgemäß eingesetzten Silikonen bei 25 °C im Bereich zwischen 0,94 g/cm$^3$ bis 0,97 g/cm$^3$. Die Berechnung der Viskosität erfolgt bei den derzeit eingesetzten Geräten unter Kenntnis der spezifischen Eigenschaften des verwendeten Messsystems automatisch, wobei der Einfluss der Messsystemgeometrie durch entsprechende Faktoren berücksichtigt und herausgerechnet wird. Dadurch wird erreicht, dass die Messwerte nur marginal von denen abweichen, die unter Einsatz anderer Methoden, wie Auslaufbecher, Kapillarrheometer oder aller Arten von Kugelfallviskosimetern, gewonnen werden, bei denen üblicherweise ebenfalls entsprechende Geometriekompensationen, beispielsweise im Hinblick auf die Durchmesser der Auslaufbecher, durchgeführt werden. Insbesondere bei hochviskosen Stoffen, vorzugsweise mit einer Viskosität v über 80000 mm$^2$/s, liegen dann potentielle Abweichungen aufgrund der Messmethodik in der Größenordnung der relativen Fehler des Messsystems und sind somit vernachlässigbar.

Bei älteren Messdaten (bis Ende 1977 konnten beispielsweise auch Angabe der dynamischen Viskosität in Centipoise, bzw. wie oben angegeben, der kinematischen Viskosität in Centistokes erfolgen) oder bei mit anders als nach DIN 53019-1:2008-09 genormten Geräten gewonnenen Messdaten (z. B. mit dem Saybolt-Viskosimeter nach ASTM D88-56 ermittelte Saybolt-Sekunden) ist, insbesondere gegebenenfalls mit Hilfe von Tabellen oder Nomogrammen, eine Umrechnung auf die heute im internationalen Einheitensystem üblichen Einheiten möglich, so dass unmittelbar vergleichbare Werte vorliegen. Insbesondere Polysiloxane stellen dabei wegen ihrer vergleichsweise geringen Temperatur-Viskositäts-Abhängigkeit und wegen ihrer Eigenschaft als sogenannte "Newton'sche Flüssigkeiten", also einer fehlenden Abhängigkeit der Viskosität von aufgebrachten Scherspannung, problemlos zu vermessende Substanzen dar.

Dadurch, dass die Haftklebstoffmasse erfindungsgemäß ein nicht reaktives, lineares Polydimethylsiloxan, insbesondere hoher Molekularmasse, enthält, kommt es bei dem vergleichsweise kurzen Kontakt beim Trennen von mit dem Haftklebstoff beschichteten Artikeln mit einem Schneidwerkzeug zu einer signifikant geringeren Messerverunreinigung als bei nicht erfindungsgemäßen Haftklebeartikeln und nicht zu einem Verkleben der geschnittenen Teile untereinander oder mit dem Messer, so dass störende Auswirkungen auf den Trennprozess deutlich vermindert werden oder ganz unterbleiben.

Hierbei wird unter anderem auch der Umstand ausgenutzt, dass die erfindungsgemäß eingesetzten Polysiloxane bei 25 °C eine nur geringe Oberflächenspannung im Bereich von 18,0 mN/m bis 21,7 mN/m, insbesondere im Bereich von 20,8 mN/m bis 21,6 mN/m, gemessen nach DIN 53 914:1997-07, aufweisen. Beispielsweise weist das o. g. "AK 60000" der Wacker AG bei 25 °C eine Oberflächenspannung von 21,5 mN/m auf.

Unter "hoher Molekularmasse" wird dabei verstanden, dass die molare Masse des Polydimethylsiloxans mindestens 10000 g/mol, vorzugsweise mindestens 50000 g/mol, beträgt, bzw. dass sie alternativ mindestens den beanspruchten Wert von 80000 g/mol, vorzugsweise von 100000 g/mol erreicht. Als Obergrenze des erfindungsgemäß eingesetzten Polydimethylsiloxans kann eine molare Masse von 500000 g/mol angesehen werden.

Bei den anmeldungsgemäß angegebenen Molekularmassen (Synonyme: Molmasse, molare Masse) handelt es sich, wie bei Polymeren üblich, um eine mittlere molare Masse. Hier gibt es eine Unterscheidung zwischen $M_n$ (Zahlenmittel), Mw (Gewichtsmittel) und Mz (Zentrifugenmittel). Dabei gilt immer, dass $M_n < M_w < Mz$ ist. Letztlich basiert diese Unterscheidung nur auf verschiedenen statistischen Methoden, um die Verteilung der molaren Masse zu beschreiben. Gleich sind diese Werte nur in dem theoretischen Fall, dass alle Moleküle tatsächlich die gleiche Molmasse haben und keine Verteilung vorliegt. Bei den in den Prospekten der verschiedensten Hersteller enthaltenen Angaben handelt es sich in der Regel um das Zahlenmittel $M_n$, welches die bei weitem üblichste Angabe zur Charakterisierung eines solchen Mittelwertes ist. Durch Quotientenbildung $M_w/M_n$ lässt sich dabei die sogenannte Polydispersität D berechnen, welche ein Maß für die Breite der Molmassenverteilung ist. Die Art und Breite der Molmassenverteilung erscheinen für die Erfindung nicht von Bedeutung, da sie sich technisch bedingt im Herstellungsverfahren stets in ähnlicher Form einstellen.

Molare Massen können auch unter Verwendung der von A. J. Barry aufgefundenen Korrelation zwischen der kinematischen Viskosität und der molaren Masse von Polysiloxanen (J. Appl. Physics, 117, 1020, 1946) nach der Formel

$$M_n = [ (\log v - 1) / 0{,}0123 ]^2$$

aus Messungen der Viskosität v errechnet werden, wobei v der Zahlenwert der kinematischen Viskosität bei 25 °C (angegeben in $mm^2/s$) und $M_n$ das Zahlenmittel der Molmasse ist, welches jedoch als Voraussetzung für die Anwendbarkeit der Formel höher liegen muss als 2500 g/mol.

Grundsätzlich hat sich die Verwendung hochmolekularer Silikone als vorteilhaft herausgestellt. Zwar ist die schneidunterstützende Wirkung niedermolekularer Silikone nicht schlechter, sie haben aber eine deutlich höhere Migrationsneigung, die Probleme an anderer Stelle verursachen könnte. So könnte beispielsweise die Klebkraft des erfindungsgemäßen Haftklebstoffs zu stark herabgesetzt werden.

Das Polydimethylsiloxan wirkt vorteilhafterweise als ein internes Schmiermittel, welches beim Schneidvorgang die Schnittkante und das Schneidwerkzeug kurzzeitig passiviert. Durch den erfindungsgemäß vorgesehenen Mengenanteil an Polydimethylsiloxan im Bereich von 1,0 bis 10,0 Masseprozent in der Klebstoffmasse ist dabei gesichert, dass die Klebkraft und die Scherfestigkeit im Vergleich mit bekannten Klebstoffmassen ohne Polydimethylsiloxan nicht signifikant absinken, sondern erhalten bleiben.

Weitere vorteilhafte Ausführungen der Erfindung sind in den Unteransprüchen und der nachfolgenden speziellen Beschreibung enthalten.

In den nachstehend aufgeführten Ausführungsformen der Erfindung werden verschiedene, erfindungsgemäß bevorzugte Haftklebstoff-Rezepturen vorgestellt, die sich insbesondere durch die Natur der ersten Komponente in der Haftklebstoffmasse unterscheiden. Diese Rezepturen werden jeweils Vergleichsrezepturen gegenübergestellt, in denen kein Polydimethylsiloxan enthalten ist.

In Tabelle 1 sind exemplarisch Rezepturen mit einem Synthesekautschuk-Klebstoff aufgeführt.

Bei dem in der Tabelle genannten Silikonöl AK 500000 der Firma Wacker handelt es sich dabei um ein Polydimethylsiloxan mit einer kinematischen Viskosität von 500000 $mm^2/s$.

Tabelle1: Rezepturen Beispiele 1a (Vergleichsbeispiel) und 1b (erfindungsgemäß)

|  |  | Hersteller | 1a | 1b |
|---|---|---|---|---|
| Synthesekautschuk | Vecor 4114 | Dexco | 32 % | 30 % |
| Terpenphenolharz | Dertophene T | DRT | 18 % | 17 % |
| Kolophoniumharz | Granolite P | DRT | 18 % | 17 % |
| Weichharz | Wingtack 10 | Cray Valley | 26,5 % | 25 % |
| PE-Wachs | A-C8 | Honeywell | 5 % | 5 % |
| Oxidationsschutz | Irganox 1010 | BASF | 0,5 % | 0,5 % |
| Silikonöl | AK 500000 | Wacker | - | 5% |

Generell sollte die kinematische Viskosität des erfindungsgemäß eingesetzten Polydimethylsiloxans mindestens 50000 $mm^2/s$, vorzugsweise mindestens 100000 $mm^2/s$, betragen. Als Obergrenze kann ein Wert von 10 Millionen $mm^2/s$ angesehen werden.

Bei dem in der Tabelle genannten Weichharz handelt es sich um ein klebrig machendes synthetisches C5-Harz mit einem Erweichungspunkt von weniger als 20°C.

"Oxidationsschutz" in der Tabelle 1 bezeichnet die Beimengung von Substanzen, welche der thermooxidativen Schädigung eines Polymers, hier eines Schmelzklebstoffes, entgegenwirken. Bevorzugt werden dafür, wie hier mit insbesondere dem genannten Irganox 1010, sterisch gehinderte Phenole als Radikalfänger eingesetzt.

Beide Beispielklebstoffe wurden als Schmelzklebstoffe auf ein 80 $g/m^2$-Papier beschichtet und mit einem einseitig silikonisierten 100 $g/m^2$-Papier abgedeckt.

In Tabelle 2 sind exemplarisch Rezepturen mit einem Dispersionsacrylat-Klebstoff, unter Berücksichtigung der unterschiedlichen Festkörper, also ohne den Wasseranteil, aufgeführt.

Unter einem Dispersionsacrylat, wie es in Tabelle 2 genannt ist, versteht man dabei eine wässrige Dispersion eines Polyacrylsäureesters, die durch Emulsionspolymerisation hergestellt ist.

Tabelle 2: Rezepturen Beispiele 2a (Vergleichsbeispiel) und 2b (erfindungsgemäß)

|  |  | Hersteller | 2a | 2b |
|---|---|---|---|---|
| Dispersionsacrylat | Acronal V215 (FK 69%) | BASF | 46 % | 43,5 % |
| Dispersionsacrylat | Acronal 80D (FK 50 %) | BASF | 20 % | 19 % |
| Harzdispersion | Dermulsene RE802 (FK 52 %) | DRT | 33,5 % | 32 % |
| DOSS* | OT75 | Airproducts | 0,5 % | 0,5 % |
| Silikonöldispersion | HV 495 (FK 40 %) | Dow Corning | - | 5 % |
| *Dioctylsulfosuccinat |  |  |  |  |

Bei der in der Tabelle 2 aufgeführten Silikonöldispersion handelt es sich um eine wässrige Dispersion eines Polydimethylsiloxans. Diese wird nicht durch eine Emulsionspolymerisation, sondern durch nachträgliches Emulgieren eines Polydimethylsiloxans hergestellt. Mit "FK" ist in der zweiten Tabellenspalte dabei der jeweilige Festkörperanteil in der Dispersion bezeichnet. Bei der Silikonöldispersion handelte es sich um eine milchweiße Flüssigkeit, die eine kinematische Viskosität im Bereich von 78000 $mm^2$/s bis 200000 $mm^2$/s aufweisen kann, wobei die molare Masse des Silikonöls mindestens 100000 g/mol erreicht.

Beide Beispielklebstoffe wurden in einer Grammatur von 18 g/$m^2$ auf ein einseitig silikonisiertes Papier mit einem spezifischen Flächengewicht von 90 g/$m^2$ aufgebracht, dort getrocknet und dann auf ein Papier mit einem spezifischen Flächengewicht von 80 g/$m^2$ transferiert.

In Tabelle 3 sind exemplarisch Rezepturen mit einem UV-Acrylat-Klebstoff aufgeführt.

Tabelle 3: Rezepturen Beispiele 3a (Vergleichsbeispiel)und 3b (erfindungsgemäß)

|  |  | Hersteller | 3a | 3b |
|---|---|---|---|---|
| Polyacrylat | AcResin 3502 | BASF | 100 % | 97 % |
| Silikonöl | AK 500000 | Wacker Chemie | - | 3 % |

Bei dem Silikonöl AK 500000 der Firma Wacker handelte es sich wiederum um ein Polydimethylsiloxan mit einer kinematischen Viskosität von 500000 $mm^2$/s.

Beide Beispielklebstoffe wurden mit einer Grammatur von 30 g/$m^2$ auf eine einseitig silikonisierte PET-Folie einer Dicke von 50 μm aufgetragen, dort unter der Wirkung einer UV-C-Dosis von 65 mJ/$cm^2$ vernetzt und dann auf eine nicht silikonisierte 50 μm dicke PET-Folie transferiert. Die UV-C-Dosis wurde mit dem Dosimeter "Power Puck" der Fa. EIT, Sterling, Virginia, bestimmt.

An den Mustern wurden in Form der Klebkraft und der Scherfestigkeit typische, für die Adhäsion und Kohäsion repräsentative Haftklebstoff-Basisdaten bestimmt.

Ferner wurde in einem Labortest die Schneidbarkeit des Selbstklebematerials geprüft. Dazu wurden jeweils zwei DIN-A4 Bögen des Haftmaterials übereinander gelegt und mit einer handelsüblichen Schlagschere mit gereinigtem, glattem Stahlmesser 5 mm breite Streifen abgeschnitten. Das Messer besaß eine Breite im Bereich von 50 mm bis 60 mm. Die Verunreinigung des Messers wurde nach mehreren Schnitten geprüft.

Die Muster der Beispiele zeigten die in Tabelle 4 aufgeführten Eigenschaften.

Tabelle 4: Vergleich der Eigenschaften der Beispiele

|  | Beispiel 1a | Beispiel 1b | Beispiel 2a | Beispiel 2b | Beispiel 3a | Beispiel 3b |
|---|---|---|---|---|---|---|
| Klebkraft (auf Stahl) [N/cm] DIN EN 1939 | > 8* | > 8* | 7 | 7 | 6,5 | 6 |
| Scherfestigkeit 625 $mm^2$; 23°C [min] | > 10000 | > 10000 | > 10000 | > 10000 | > 10000 | > 10000 |

(fortgesetzt)

| | Beispiel 1a | Beispiel 1b | Beispiel 2a | Beispiel 2b | Beispiel 3a | Beispiel 3b |
|---|---|---|---|---|---|---|
| Schneidtest mit 5 Schnitten | Messer auf 45 mm stark klebrig, Streifen haften am Messer | Messer auf 1 mm klebrig, Streifen haften nicht am Messer | Messer auf 45 mm stark klebrig, Streifen haften am Messer | Messer auf 1 mm klebrig, Streifen haften nicht am Messer | Messer auf 45 mm stark klebrig, Streifen haften am Messer | Messer auf 1 mm klebrig, Streifen haften nicht am Messer |
| Schneidtest mit 50 Schnitten | - | Messer auf 3 mm klebrig, Streifen haften nicht am Messer | - | Messer auf 2 mm klebrig, Streifen haften nicht am Messer | - | Messer auf 3 mm klebrig, Streifen haften nicht am Messer |
| *Papierriss | | | | | | |

Bei der in der Tabelle 4 genannten DIN EN 1939 "Klebebänder - Bestimmung der Klebkraft" handelt es sich um die Version DIN EN 1939:2003-12. Die Klebkraft auf Stahl kann insbesondere im Bereich von 5 N/cm bis 10 N/cm, vorzugsweise im Bereich von 6 N/cm bis 8 N/cm, gemessen nach DIN EN 1939:2003-12 liegen.

Allgemein kann erfindungsgemäß erreicht werden, dass die Klebkraft auf Stahl, gemessen nach DIN EN 1939:2003-12, gegenüber einem Haftklebeartikel, welcher die zweite, silikonhaltige Klebstoffkomponente nicht enthält, aber bei dem die übrigen Komponenten der Haftklebemasse im gleichen Verhältnis zueinander stehen, nur um maximal 10 Prozent reduziert ist.

Die Scherfestigkeit wurde nach der DIN EN 1943:2003-01, "Klebebänder - Messung des Scherwiderstandes unter statischer Belastung"; deutsche Fassung EN 1943:2002, bestimmt.

Die Ergebnisse verdeutlichen, dass die Erfindung bei Schneidprozessen, unter Ausschluss eines negativen Einflusses auf Klebkraft und Scherfestigkeit eine verbesserte Verarbeitbarkeit bewirkt.

Darüber hinaus wurden mit den Mustern folgende Praxistests durchgeführt: Riese der Abmessung 70 cm x 100 cm mit je 200 Bögen Haftmaterial wurden an einem Planschneider mit Glattmesser in kleine Quadrate der Abmessung 5 cm x 5 cm geschnitten. Bei den Materialien aus den erfindungsgemäßen Beispielen 1b, 2b und 3b war dies problemlos möglich, bei den Materialien aus den Vergleichsbeispielen 1a, 2a und 3a verklebten die Bögen bereits nach dem dritten Schnitt und blieben am Messer hängen, so dass ein sauberes Schneiden und Ablegen der Quadratstapel nicht mehr möglich war.

Die Erfindung ist nicht auf die dargestellten Ausführungsbeispiele beschränkt, sondern umfasst im Rahmen der Ansprüche auch alle im Sinne der Erfindung gleichwirkenden Ausführungen und Verwendungen. So ist es denkbar, dass im Gegensatz zu dem exemplarisch beschriebenen Polydimethylsiloxan ein Polysiloxan eingesetzt wird, bei dem neben und/oder anstelle der Methylgruppen andere Substituenten, wie z. B. Alkylreste mit mehr als einem Kohlenstoffatom, Phenylreste und/oder Halogene, an die Hauptkette gebunden sind,

Was den schon erwähnten Einfluss der molaren Masse des Polydimethylsiloxans betrifft, so wird dessen Migrationsfähigkeit mit zunehmendem Polymerisationsgrad n kleiner bzw. mit abnehmendem Polymerisationsgrad n größer. Verwendet man beispielsweise in Beispiel 1b statt AK 500000, das aus deutlich mehr als 1000 Dimethylsiloxaneinheiten in der Polymerkette besteht, ein AK 50 mit unter 100 Dimethylsiloxaneinheiten in der Polymerkette, so kommt es nachteiligerweise bereits nach einer Wärmelagerung von 24 h bei 70 °C zu einer sichtbaren Silikonwanderung in den Papierträger.

Erfindungsgemäß ist die Verwendung niedermolekularer Silikonöle, wenn diese bei einer molaren Masse des Polysiloxans von weniger als 10000 g/mol mikroverkapselt werden. Eine Mikroverkapselung ist aufgrund der dann noch ausreichenden Fließfähigkeit alternativ erfindungsgemäß auch für alle Fälle vorgesehen, bei denen die kinematische Viskosität des unvernetzten Polysiloxans kleiner ist als 100000 mm$^2$/s.

Unter Mikroverkapselung versteht man dabei allgemein die Umhüllung feinster Tropfen eines meist flüssigen Wirkstoffes mit einem dünnwandigen, inerten Material. Auf die Erfindung bezogen verhindert eine solche Verkapselung eine unerwünschte Migration von niedermolekularem Silikonöl. Im Moment des Schneidens wird die Hülle der Mikrokapseln durch das Schneidwerkzeug verletzt. Das Silikonöl, welches den flüssigen Kern bildet, tritt dadurch aus und nimmt lokal eng begrenzt seine Funktion als Trennmittel wahr. Die Teilchengröße der Mikrokapseln kann in einem Bereich von 3 $\mu$m bis 800 $\mu$m, vorzugsweise in einem Bereich von 5 $\mu$m bis 100 $\mu$m, liegen. Als inert bezeichnet man Materialien, die unter geeigneten Bedingungen, wie Druck und Temperatur, chemisch mit den meisten Stoffen nicht reagieren. Als inert werden z. B. Keramik, Fluorkunststoffe, wie PTFE, und die Edelmetalle Gold und Platin bezeichnet, sowie aber auch die Gelatine mikroverkapselter Medikamente.

Eine Mikroverkapselung von Silikonöl ist an sich bekannt und beispielsweise in der DE 101 56 672 A1 beschrieben. Die dort beschriebenen, exemplarisch hergestellten Partikel sind Mikrokapseln mit einer mittleren Teilchengröße von 3 $\mu$m und 5 $\mu$m, die eine flüssige Phase von Silikonöl aufweisen, das in Kapselwänden aus polyharnstoffhaltigem Material eingeschlossen ist.

Obwohl sich in der DE 101 56 672 A1 keinerlei Hinweise finden, Mikrokapseln generell und mikroverkapseltes Silikonöl speziell in Klebstoffen, insbesondere in Haftklebstoffen, und besonders bevorzugt in mit Haftklebstoffen versehenen Klebeartikeln einsetzen zu können, hat sich gezeigt, dass das beschriebene Hüllmaterial der Kapselwände mit den bevorzugt als Materialien der ersten Klebstoffkomponente im Rahmen der Erfindung eingesetzten Haftklebstoffen, auf der Basis von Kautschuk, von Dispersionsklebstoffen auf der Basis von Polyacrylsäureestern, von Schmelzklebstoffes auf der Basis von UV-vernetzten Polyacrylsäureestern oder von UV-polymerisierten Polyacrylsäureestern, kompatibel ist und die Klebeeigenschaften, zumindest dann, wenn die zweite, silikonhaltige Klebstoffkomponente in einem Anteil im Bereich von 1,0 bis 10,0 Masseprozent vorliegt, nicht negativ beeinflusst.

Eine Mikroverkapselung ist allerdings nur dann sinnvoll, wenn gewährleistet ist, dass die Mikrokapseln bei der Anwendung - wie in Anwendung der Erfindung beim Schneiden - aufgebrochen werden und dadurch das Silikon als Wirkstoff freigesetzt wird. Beispielsweise würde bei einer bloßen Verklebung eines Klebebandes, wie es die WO 99/26572 A1 vorsieht, welches in seiner Klebeschicht einen mikroverkapselten Stoff enthielte, die erforderliche Kapselöffnung nicht erfolgen und somit eine auf den verkapselten Stoff zurückzuführende, gewünschte Wirkung nicht erzielt werden können.

**Patentansprüche**

1. Haftklebstoff, in Form einer Klebstoffmasse, die mindestens eine erste Klebstoffkomponente und eine zweite, silikonhaltige Klebstoffkomponente enthält, wobei die zweite, silikonhaltige Klebstoffkomponente aus einem unvernetzten Polysiloxan besteht und in einem Anteil im Bereich von 1,0 bis 10,0 Masseprozent in der Klebstoffmasse enthalten ist, und die erste Klebstoffkomponente ein Haftklebstoff

   - auf Basis eines Synthese- oder Naturkautschuks,
   - ein Dispersionsklebstoff auf der Basis eines Polyacrylsäureesters,
   - ein Schmelzklebstoff auf Basis eines UV-vernetzten Polyacrylsäureesters
   - oder ein UV-polymerisierter Polyacrylsäureester ist,

   **dadurch gekennzeichnet,**
   - **dass** die kinematische Viskosität - bestimmt nach DIN 53019-1:2008-09 bei 25 °C - des unvernetzten Polysiloxans mindestens 100000 mm$^2$/s und höchstens 10000000 mm$^2$/s beträgt,
   oder
   - **dass** das Zahlenmittel $M_n$ der molaren Masse des unvernetzten Polysiloxans - bestimmt nach der - ab einer molaren Masse von 2500 g/mol geltenden - Formel $M_n = [ (\log v -1) / 0{,}0123 ]^2$, wobei v der Zahlenwert der kinematischen Viskosität bei 25 °C ist, bestimmt nach DIN 53019-1:2008-09 und angegeben in mm$^2$/s, und $M_n$ das Zahlenmittel der molare Masse ist - kleiner ist als 10000 g/mol, wobei die zweite, silikonhaltige Klebstoffkomponente mikroverkapselt ist

2. Haftklebstoff nach dem Oberbegriff des Anspruchs 1,
   **dadurch gekennzeichnet,**

   - **dass** das Zahlenmittel $M_n$ der molaren Masse des unvernetzten Polysiloxans - bestimmt nach der Formel $M_n = [ (\log v -1) / 0{,}0123 ]^2$, wobei v der Zahlenwert der kinematischen Viskosität bei 25 °C ist, bestimmt nach DIN 53019-1:2008-09 und angegeben in mm$^2$/s, und $M_n$ das Zahlenmittel der molaren Masse ist - mindestens 80000 g/mol und höchstens 500000 g/mol beträgt
   oder

   **dass** die kinematische Viskosität - bestimmt nach DIN 53019-1:2008-09 bei 25 °C - des unvernetzten Polysiloxans kleiner ist als 100000 mm$^2$/s, wobei die zweite, silikonhaltige Klebstoffkomponente mikroverkapselt ist.

3. Haftklebstoff nach Anspruch 1 oder 2,
   **dadurch gekennzeichnet, dass** die zweite, silikonhaltige Klebstoffkomponente aus einem unvernetzten Polydimethylsiloxan mit der chemischen Formel $(CH_3)_3Si$-$[O$-$Si(CH_3)_2]_m$-$O$-$Si(CH_3)_3$ besteht, wobei sich der Polymerisationsgrad zu n = m + 2 ergibt, für den Index m $\geq$ 0 gilt, und wobei die molare Masse der Wiederholeinheit -$[O$-$Si(CH_3)_2]$- 74,15 g/mol beträgt.

4. Haftklebstoff nach Anspruch 2,

**dadurch gekennzeichnet, dass** das Zahlenmittel $M_n$ der molaren Masse des Polysiloxans, insbesondere des Polydimethylsiloxans, - bestimmt nach der Formel $M_n = [ (\log v -1) / 0{,}0123 ]^2$, wobei $v$ der Zahlenwert der kinematischen Viskosität bei 25 °C ist, bestimmt nach DIN 53019-1:2008-09 und angegeben in $mm^2/s$, und $M_n$ das Zahlenmittel der molaren Masse ist - mindestens 100000 g/mol, beträgt.

**5.** Haftklebstoff nach einem der Ansprüche 1 bis 4,
**dadurch gekennzeichnet, dass** die Oberflächenspannung des Polysiloxans bei 25 °C im Bereich von 18,0 mN/m bis 21,7 mN/m, insbesondere im Bereich von 20,8 mN/m bis 21,6 mN/m, gemessen nach DIN 53 914:1997-07, liegt.

**6.** Haftklebeartikel, insbesondere Klebeband, umfassend einen bandförmigen Träger, auf den zumindest einseitig ein Haftklebstoff in Form einer Klebstoffmasse aufgetragen ist,
**dadurch gekennzeichnet, dass** die Klebstoffmasse die Merkmale eines der Ansprüche 1 bis 5 aufweist.

**7.** Haftklebeartikel, insbesondere Etikett, umfassend ein insbesondere aus Papier bestehendes Trägermaterial, auf das zumindest einseitig ein Haftklebstoff in Form einer Klebstoffmasse aufgetragen ist,
**dadurch gekennzeichnet, dass** die Klebstoffmasse die Merkmale eines der Ansprüche 1 bis 5 aufweist.

**8.** Haftklebeartikel nach Anspruch 6 oder 7,
**dadurch gekennzeichnet, dass** der Träger oder das Trägermaterial aus einem Papier, einer Folie oder einem textilen Stoff, wie einem Gewebe und/oder einem Vlies, besteht.

**9.** Haftklebeartikel nach Anspruch 8,
**dadurch gekennzeichnet, dass** die Folie oder der textile Stoff aus einem Polyolefin, einem Polyester, wie Polyethylenterephthalat (PET), einem Polyamid, einem Polystyrol oder aus einem anderen Kunststoff besteht.

**10.** Haftklebeartikel nach einem der vorhergehenden Ansprüche,
**dadurch gekennzeichnet, dass** der Träger oder das Trägermaterial eine Dicke im Bereich von 10 $\mu$m bis 500 $\mu$m, vorzugsweise im Bereich von 20 $\mu$m bis 200 $\mu$m, aufweist.

**11.** Haftklebeartikel nach einem der vorhergehenden Ansprüche,
**gekennzeichnet durch** eine Klebkraft auf Stahl im Bereich von 5 N/cm bis 10 N/cm, vorzugsweise von 6 N/cm bis 8 N/cm, gemessen nach DIN EN 1939:2003-12.

**12.** Haftklebeartikel nach einem der vorhergehenden Ansprüche,
**dadurch gekennzeichnet, dass** eine Klebkraft auf Stahl, gemessen nach DIN EN 1939:2003-12, gegenüber einem Haftklebeartikel, welcher die zweite, silikonhaltige Klebstoffkomponente nicht enthält, aber bei dem die übrigen Komponenten der Haftklebemasse im gleichen Verhältnis zueinander stehen, um maximal 10 Prozent reduziert ist.

**13.** Haftklebeartikel nach einem der vorhergehenden Ansprüche,
**dadurch gekennzeichnet, dass** die Klebstoffmasse mit einem zusätzlichen Liner abgedeckt ist, welcher aus einem ein- oder doppelseitig silikonisierten Papier oder aus einer ein- oder doppelseitig silikonisierten Folie besteht.

**14.** Verfahren zur Herstellung eines Haftklebeartikels, wie einem Etikett oder einem Klebeband, nach einem der Ansprüche 6 bis 13 mit einer Haftklebemasse nach einem der Ansprüche 1 bis 5, wobei der Haftklebeartikel ausgehend von einem Basisprodukt mit einer Breite im Bereich von 100 mm bis 2500 mm durch Schneiden oder Stanzen seine Endabmessung erhält, wobei die dazu verwendeten Schneidwerkzeuge an den Schnittkanten des Haftklebeartikels in direkten Kontakt mit dem Haftklebstoff gelangen.

**15.** Verfahren nach Anspruch 14,
**dadurch gekennzeichnet, dass** der Haftklebeartikel ein Klebeband ist, das mittels Kreismesser oder Stichel aus einer Rolle mit bis zu tausend Lagen übereinander abgestochen wird, oder dass der Haftklebeartikel ein Etikett ist, das mittels Planschneider aus einem Stapel von bis zu tausend Bögen übereinander geschnitten oder gestanzt wird.

**Claims**

**1.** Pressure-sensitive adhesive, in the form of an adhesive mass, which contains at least a first adhesive component and a second, silicone-containing adhesive component, wherein the second, silicone-containing adhesive component consists of a non-crosslinked polysiloxane and is contained in a proportion in the range of 1,0 to 10,0 mass percent in the adhesive mass, and the first adhesive component is a pressure-sensitive adhesive

- based on a synthetic or natural rubber,
- a dispersion adhesive based on a polyacrylic acid ester,
- a hot-melt adhesive based on a UV-crosslinked polyacrylic acid ester
- or a UV-polymerized polyacrylic acid ester,

**characterized in that**

- the kinematic viscosity - determined according to DIN 53019-1:2008-09 at 25 °C - of the non-crosslinked polysiloxane is at least 100000 $mm^2/s$ and at most 10000000 $mm^2/s$,

or

- the number average $M_n$ of the molar mass of the non-crosslinked polysiloxane - determined according to the - valid from a molar mass of 2500 g/mol - formula $M_n = [ (\log v -1) / 0,0123 ]^2$, where v is the numerical value of the kinematic viscosity at 25 °C, determined according to DIN 53019-1:2008-09 and given in $mm^2/s$, and $M_n$ is the number average of the molar mass - is smaller than 10000 g/mol, wherein the second, silicone-containing adhesive component is microencapsulated.

2. Pressure-sensitive adhesive according to the preamble of claim 1,
   **characterized in that**

   - the number average $M_n$ of the molar mass of the non-crosslinked polysiloxane - determined according to the formula $M_n = [ (\log v -1) / 0,0123 ]^2$, where v is the numerical value of the kinematic viscosity at 25 °C, determined according to DIN 53019-1:2008-09 and given in $mm^2/s$, and $M_n$ is the number average of the molar mass - is at least 80000 g/mol and at most 500000 g/mol

   or

   the kinematic viscosity - determined according to DIN 53019-1:2008-09 at 25 °C - of the non-crosslinked polysiloxane is smaller than 100000 $mm^2/s$, wherein the second, silicone-containing adhesive component is microencapsulated.

3. Pressure-sensitive adhesive according to claim 1 or 2,
   **characterized in that** the second, silicone-containing adhesive component consists of a non-crosslinked polydimethylsiloxane with the chemical formula $(CH_3)_3Si-[O-Si(CH_3)_2]_m-O-Si(CH_3)_3$, wherein the degree of polymerization is n = m + 2, for which the index $m \geq 0$ applies, and wherein the molar mass of the repeating unit $-[O-Si(CH_3)_2]-$ is 74,15 g/mol.

4. Pressure-sensitive adhesive according to claim 2,
   **characterized in that** the number average $M_n$ of the molar mass of the polysiloxane, in particular of the polydimethylsiloxane, - determined according to the formula $M_n = [ (\log v -1) / 0,0123 ]^2$, where v is the numerical value of the kinematic viscosity at 25 °C, determined according to DIN 53019-1:2008-09 and given in $mm^2/s$, and $M_n$ is the number average of the molar mass - is at least 100000 g/mol.

5. Pressure-sensitive adhesive according to one of claims 1 to 4,
   **characterized in that** the surface tension of the polysiloxane at 25 °C is in the range of 18,0 mN/m to 21,7 mN/m, in particular in the range of 20,8 mN/m to 21,6 mN/m, measured according to DIN 53 914:1997-07.

6. Pressure-sensitive adhesive article, in particular adhesive tape, comprising a tape-shaped carrier, onto which a pressure-sensitive adhesive in the form of an adhesive mass is applied at least on one side,
   **characterized in that** the adhesive mass has the features of one of claims 1 to 5.

7. Pressure-sensitive adhesive article, in particular label, comprising a carrier material consisting in particular of paper, onto which a pressure-sensitive adhesive in the form of an adhesive mass is applied at least on one side,
   **characterized in that** the adhesive mass has the features of one of claims 1 to 5.

8. Pressure-sensitive adhesive article according to claim 6 or 7,
   **characterized in that** the carrier or the carrier material consists of a paper, a film or a textile fabric, such as a woven fabric and/or a nonwoven.

9. Pressure-sensitive adhesive article according to claim 8,

**characterized in that** the film or the textile fabric consists of a polyolefin, a polyester, such as polyethylene terephthalate (PET), a polyamide, a polystyrene or another plastic.

10. Pressure-sensitive adhesive article according to one of the preceding claims,
**characterized in that** the carrier or the carrier material has a thickness in the range of 10 $\mu$m to 500 $\mu$m, preferably in the range of 20 $\mu$m to 200 $\mu$m.

11. Pressure-sensitive adhesive article according to one of the preceding claims,
**characterized by** an adhesive strength on steel in the range of 5 N/cm to 10 N/cm, preferably from 6 N/cm to 8 N/cm, measured according to DIN EN 1939:2003-12.

12. Pressure-sensitive adhesive article according to one of the preceding claims,
**characterized in that** an adhesive strength on steel, measured according to DIN EN 1939:2003-12, compared to a pressure-sensitive adhesive article which does not contain the second, silicone-containing adhesive component, but in which the other components of the pressure-sensitive adhesive mass are in the same ratio to each other, is reduced by a maximum of 10 percent.

13. Pressure-sensitive adhesive article according to one of the preceding claims,
**characterized in that** the adhesive mass is covered with an additional liner, which consists of a single- or double-sided siliconized paper or of a single- or double-sided siliconized film.

14. Method for producing a pressure-sensitive adhesive article, such as a label or an adhesive tape, according to one of claims 6 to 13 with a pressure-sensitive adhesive mass according to one of claims 1 to 5, wherein the pressure-sensitive adhesive article, starting from a base product with a width in the range of 100 mm to 2500 mm, obtains its final dimensions by cutting or punching, wherein the cutting tools used for this purpose come into direct contact with the pressure-sensitive adhesive at the cut edges of the pressure-sensitive adhesive article.

15. Method according to claim 14,
**characterized in that** the pressure-sensitive adhesive article is an adhesive tape that is cut out from a roll with up to a thousand layers stacked on top of each other by means of circular knives or stylus, or that the pressure-sensitive adhesive article is a label that is cut or punched from a stack of up to a thousand sheets stacked on top of each other by means of a flat cutter.

**Revendications**

1. Adhésif sensible à la pression, sous forme d'une masse adhésive, qui contient au moins un premier composant adhésif et un second composant adhésif contenant du silicone, où le second composant adhésif contenant du silicone consiste en un polysiloxane non réticulé et est contenu dans une proportion dans la plage de 1,0 à 10,0 pour cent en masse dans la masse adhésive, et le premier composant adhésif est un adhésif sensible à la pression

- à base d'un caoutchouc synthétique ou naturel,
- un adhésif en dispersion à base d'un ester d'acide polyacrylique,
- un adhésif thermofusible à base d'un ester d'acide polyacrylique réticulé aux UV
- ou un ester d'acide polyacrylique polymérisé aux UV,
**caractérisé en ce que**

- la viscosité cinématique - déterminée selon DIN 53019-1:2008-09 à 25 °C - du polysiloxane non réticulé est d'au moins 100000 mm$^2$/s et d'au plus 10000000 mm$^2$/s,
ou

- la moyenne en nombre $M_n$ de la masse molaire du polysiloxane non réticulé - déterminée selon la formule - valable à partir d'une masse molaire de 2500 g/mol - $M_n = [\,(\log v - 1)/0,0123\,]^2$, où v est la valeur numérique de la viscosité cinématique à 25 °C, déterminée selon DIN 53019-1:2008-09 et exprimée en mm$^2$/s, et $M_n$ est la moyenne en nombre de la masse molaire - est inférieure à 10000 g/mol, où le second composant adhésif contenant du silicone est microencapsulé

2. Adhésif sensible à la pression selon le préambule de la revendication 1,

**caractérisé en ce que**

- la moyenne en nombre $M_n$ de la masse molaire du polysiloxane non réticulé - déterminée selon la formule $M_n =$ [ (log v -1) / 0,0123 ]$^2$, où v est la valeur numérique de la viscosité cinématique à 25 °C, déterminée selon DIN 53019-1:2008-09 et exprimée en mm$^2$/s, et $M_n$ est la moyenne en nombre de la masse molaire - est d'au moins 80000 g/mol et d'au plus 500000 g/mol

ou

la viscosité cinématique - déterminée selon DIN 53019-1:2008-09 à 25 °C - du polysiloxane non réticulé est inférieure à 100000 mm$^2$/s, où le second composant adhésif contenant du silicone est microencapsulé.

3. Adhésif sensible à la pression selon la revendication 1 ou 2,
   **caractérisé en ce que** le second composant adhésif contenant du silicone consiste en un polydiméthylsiloxane non réticulé avec la formule chimique $(CH_3)_3Si\text{-}[O\text{-}Si(CH_3)_2]_m\text{-}O\text{-}Si(CH_3)_3$, où le degré de polymérisation est n = m + 2, pour lequel l'indice m ≥ 0 s'applique, et où la masse molaire de l'unité de répétition -[O-Si(CH$_3$)$_2$]- est de 74,15 g/mol.

4. Adhésif sensible à la pression selon la revendication 2,
   **caractérisé en ce que** la moyenne en nombre $M_n$ de la masse molaire du polysiloxane, en particulier du polydiméthylsiloxane, - déterminée selon la formule $M_n =$ [ (log v -1) / 0,0123 ]$^2$, où v est la valeur numérique de la viscosité cinématique à 25 °C, déterminée selon DIN 53019-1:2008-09 et exprimée en mm$^2$/s, et $M_n$ est la moyenne en nombre de la masse molaire - est d'au moins 100000 g/mol.

5. Adhésif sensible à la pression selon l'une des revendications 1 à 4,
   **caractérisé en ce que** la tension superficielle du polysiloxane à 25 °C est dans la plage de 18,0 mN/m à 21,7 mN/m, en particulier dans la plage de 20,8 mN/m à 21,6 mN/m, mesurée selon DIN 53 914:1997-07.

6. Article adhésif sensible à la pression, en particulier ruban adhésif, comprenant un support en forme de bande, sur lequel un adhésif sensible à la pression sous forme d'une masse adhésive est appliqué au moins d'un côté,
   **caractérisé en ce que** la masse adhésive présente les caractéristiques de l'une des revendications 1 à 5.

7. Article adhésif sensible à la pression, en particulier étiquette, comprenant un matériau support constitué en particulier de papier, sur lequel un adhésif sensible à la pression sous forme d'une masse adhésive est appliqué au moins d'un côté,
   **caractérisé en ce que** la masse adhésive présente les caractéristiques de l'une des revendications 1 à 5.

8. Article adhésif sensible à la pression selon la revendication 6 ou 7,
   **caractérisé en ce que** le support ou le matériau support consiste en un papier, un film ou un textile, tel qu'un tissu et/ou un non-tissé.

9. Article adhésif sensible à la pression selon la revendication 8,
   **caractérisé en ce que** le film ou le textile consiste en une polyoléfine, un polyester, tel que le polyéthylène téréphtalate (PET), un polyamide, un polystyrène ou un autre plastique.

10. Article adhésif sensible à la pression selon l'une des revendications précédentes,
    **caractérisé en ce que** le support ou le matériau support a une épaisseur dans la plage de 10 µm à 500 µm, de préférence dans la plage de 20 µm à 200 µm.

11. Article adhésif sensible à la pression selon l'une des revendications précédentes,
    **caractérisé par** une force d'adhésion sur acier dans la plage de 5 N/cm à 10 N/cm, de préférence de 6 N/cm à 8 N/cm, mesurée selon DIN EN 1939:2003-12.

12. Article adhésif sensible à la pression selon l'une des revendications précédentes,
    **caractérisé en ce qu'**une force d'adhésion sur acier, mesurée selon DIN EN 1939:2003-12, par rapport à un article adhésif sensible à la pression qui ne contient pas le second composant adhésif contenant du silicone, mais où les autres composants de la masse adhésive sensible à la pression sont dans le même rapport les uns aux autres, est réduite d'au maximum 10 pour cent.

13. Article adhésif sensible à la pression selon l'une des revendications précédentes,

**caractérisé en ce que** la masse adhésive est recouverte d'un liner supplémentaire, qui consiste en un papier siliconé d'un ou des deux côtés ou en un film siliconé d'un ou des deux côtés.

14. Procédé de fabrication d'un article adhésif sensible à la pression, tel qu'une étiquette ou un ruban adhésif, selon l'une des revendications 6 à 13 avec une masse adhésive sensible à la pression selon l'une des revendications 1 à 5, où l'article adhésif sensible à la pression obtient ses dimensions finales à partir d'un produit de base avec une largeur dans la plage de 100 mm à 2500 mm par découpage ou poinçonnage, où les outils de découpage utilisés à cet effet entrent en contact direct avec l'adhésif sensible à la pression aux bords de coupe de l'article adhésif sensible à la pression.

15. Procédé selon la revendication 14,
**caractérisé en ce que** l'article adhésif sensible à la pression est un ruban adhésif qui est découpé au moyen de lames circulaires ou de poinçons d'un rouleau avec jusqu'à mille couches superposées, ou que l'article adhésif sensible à la pression est une étiquette qui est découpée ou poinçonnée au moyen d'un massicot d'une pile de jusqu'à mille feuilles superposées.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2692811 A1
- US 5308887 A
- US 5464659 A
- US 5624763 A
- US 8614278 B
- WO 9926572 A1
- DE 10156672 A1